# EUROPEAN PATENT SPECIFICATION

(11) **EP 0 311 442 B1**
(45) Date of publication and mention of the grant of the patent: **14.12.1994**
(21) Application number: 88309405.4
(22) Date of filing: 07.10.1988
(51) Int. Cl.: H04N 9/79, H04N 9/83

(54) **Magnetic recording and reproducing apparatus and recording method**
Magnetisches Aufzeichnungs- und Wiedergabegerät und Aufzeichnungsverfahren
Appareil magnétique d'enregistrement et de reproduction et méthode d'enregistrement

(30) Priority: 08.10.1987 JP 254228/87
(43) Date of publication of application: 12.04.1989
(73) Proprietor: VICTOR COMPANY OF JAPAN, LIMITED, Yokohama-Shi Kanagawa-Ken 221 (JP)
(72) Inventor: Tsuruta, Masahiko, Yokohama-Shi Kanagawa-Ken (JP); Shibayama, Kenji, Shinagawa-Ku Tokyo-To (JP); Kido, Kouichi, Yokosuka-Shi Kanagawa-Ken (JP)
(74) Representative: Crawford, Andrew Birkby

(56) References cited:
- FR-A- 2 471 712
- FR-A- 2 490 905
- US-A- 3 764 739
- US-A- 4 695 900

## Description

### BACKGROUND OF THE INVENTION

### Field of the Art

The present invention relates to a magnetic recording and reproducing apparatus, and more specifically to a magnetic recording and reproducing apparatus which can record and reproduce PAL (phase alternation by line) and SECAM (Séquential Couleur à Memoire) color television system video signals in any selected one of high picture quality (high resolution power) and standard picture quality (standard resolution power) modes. The invention also comprises a corresponding recording method.

### Prior Art

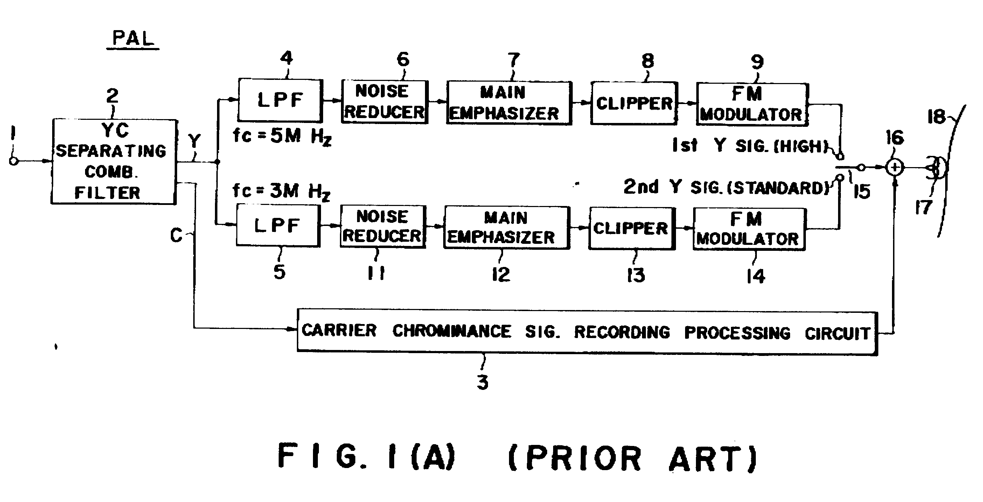

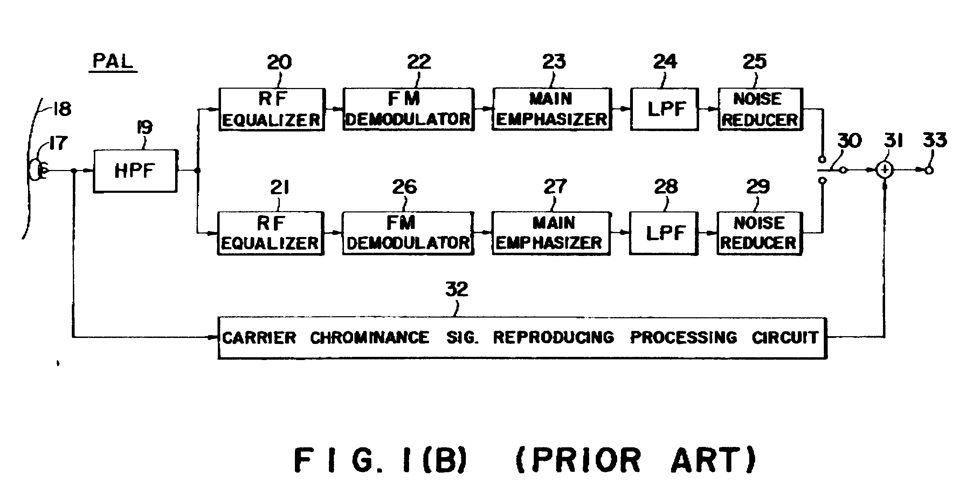

Figs. 1(A) and (B) are schematic block diagrams showing an example of prior-art magnetic recording and reproducing apparatus which can selectively record and reproduce PAL color television video signals in either one of high picture quality mode or standard picture quality mode, in which Fig. 1(A) shows a recording system thereof and Fig. 1(B) shows a reproducing system thereof.

In Fig. 1(A), incoming PAL color television video signals to an input terminal 1 are supplied to a YC separating comb filter 2 to separate the video signals into luminance signals (Y signals) and carrier chrominance signals (C signals). The luminance signals (Y signals) are supplied to two low-pass filters (referred to as LPF hereinafter) 4 and 5, respectively. The carrier chrominance signals (C signals) are supplied to a carrier chrominance signal recording processing circuit 3 for predetermined signal processing.

Wideband luminance signals passed through the LPF 4 with a cut-off frequency fc = 5 MHz is applied to a noise reducer (noise reduction circuit) 6 to reduce noise of the luminance signals; to a main emphasizer 7 to obtain high band emphasized characteristics for providing a higher signal-to-noise ratio at high frequencies; to a clipper 8 to clip overshoot or undershoot portions of the waveform so that video signals lie within a predetermined amplitude range; and to an FM modulator 9 to obtain first frequency-modulated luminance (FM luminance) signals, in sequence.

On the other hand, an LPF 5 has a cut-off frequency fc = 3 MHz the same as that in widely used two-head helical scanning-type magnetic recording and reproducing apparatus (VTR). Relatively narrow band signals passed through the LPF 5 are applied, in the same way as in the wideband luminance signals, to another noise reducer 11, another main emphasizer 12, another clipper 13, and another FM modulator 14 to obtain second frequency-modulated luminance (FM luminace) signals.

The carrier deviation bandwidth of the first FM luminance signals is determined wider than that of the second FM luminance signals, and the frequency band of the first FM luminance signals is determined to be higher and wider than those of the second FM luminance signals. Therefore, the first FM luminance signals are outputted via a switch 15 as high picture quality mode FM luminance signals, while the second FM luminance signals are outputted via the switch 15 as standard picture quality mode FM luminance signals. Being selected via the switch 15 by the user, any one of the first and second FM luminance signals is supplied to a mixer 16, by which lowband carrier chrominance signals (obtained via a carrier chrominance signal recording processing circuit 3 for converting the chrominance signals into lowband frequencies) are superposed upon a vacant low frequency band of the FM luminance signal in frequency division multiplex method. The video signals thus processed are recorded on a magnetic tape 18 via well-known recording means such as a rotary head 17.

The video signal reproducing operation will be described hereinbelow with reference to Fig. 1(B). The frequency division multiplex video signals reproduced from the magnetic tape 18 via the rotary head 17 are applied to a high-pass filter (referred to as HPF, hereinafter) 19 to obtain reproduced FM luminance signals. The obtained reproduced FM luminance signals are supplied to two RF equalizers 20 and 21, respectively. Further, the frequency division multiplex video signals reproduced from the magnetic tape 18 are applied to a carrier chrominance signal reproducing processing circuit 32, in which the lowband carrier chrominance signals are abstracted and reconverted to the original-band PAL carrier chrominance signals. The RF equalizer 20 provides optimum RF equalizer characteristics to first FM luminace signals, while the RF equalizer 21 provides optimum RF equalizer characteristics to second FM luminance signals.

The FM luminance signals outputted from the RF equalizer 20 are FM-demodulated by an FM demodulator 22 having optimum demodulation characteristics to the first FM luminance signals, de-emphasized by a main deemphasizer 23 having characteristics complementary to the main emphasizer 7, passed through an LPF 24 with a cut-off frequency 5 MHz and a noise reducer 25, and then supplied to a switch 30.

On the other hand, the FM luminance signals outputted from the RF equalizer 21 are FM-demodulated by an FM demodulator 26 having optimum demodulation characteristics to the second luminance signals, de-emphasized by a main deemphasizer 27 having characteristics complementary to the main emphasizer 12, passed through an LPF 28 with a cut-off frequency 3 MHz and a noise reducer 29, and then supplied to the switch 30.

Further, when the reproduced FM luminance signals are the first FM luminance signals, it is possible to obtain FM-demodulated wide-band reproduced luminance signals from the noise reducer 25; when the reproduced FM luminance signals are the second FM luminance signals, it is possible to obtain FM-demodulated narrow-band reproduced luminance signals from the noise reducer 29. That is, it is possible to select either one of the first FM luminance signals or the second FM luminance signals via the switch 30.

Further, the switch 30 is changed over on the basis of presence or absence of a discrimination hole formed in a cassette in which the magnetic tape 18 is housed or by detecting reproduced FM luminance signal frequencies beyond a predetermined level.

The reproduced luminance signals selected via the switch 30 are mixed with the original-band PAL carrier chrominance signals obtained through the carrier chrominance signal reproducing processing circuit 32 by a mixer 31, and then outputted as reproduced PAL color video signals through an output terminal 33.

In the prior-art magnetic recording and reproducing apparatus as described above, the two LPFs 4 and 5 are incorporated to prevent aliasing noise from being generated when the luminance signals are frequency-modulated by the FM modulators 9 and 14. On the other hand, the two LPFs 24 and 28 are incorporated to eliminate carrier components from the FM-demodulated reproduced luminance signals. Accordingly, since there exists a difference in frequency band between the high picture quality mode and the standard picture quality mode, the cut-off frequency of the LPF 4 is different from that of the LPF 5, and also the cut-off frequency of the LPF 24 is different from that of the LPF 28. Further, the LPF 4 can be used in common with the LPF 24, and the LPF 5 can be used in common with the LPF 28.

By the way, there are three, NTSC (National Television System Committee) PAL and SECAM, color television systems, and further the number of scanning lines and the field frequency in the PAL system are the same as in the SECAM system. Therefore, where a country which adopts the PAL system is adjacent or adjoining to another country which adopts the SECAM system, there exist areas at which television broadcastings can be received in both the systems. Therefore, it is desirable to realize a low-priced video tape recorder (VTR) which can record and reproduce color video signals in both PAL and SECAM systems by additionally incorporating a simple function for recording and reproducing SECAM system color video signals in a VTR of PAL system explained above with reference to Figs. 1(A) and (B).

In this case, however, since the PAL system carrier chrominance signals are AM (amplitude modulated) signals, it is possible to use the YC separator 2 or a comb filter in order to improve the resolution power in the recording system. On the other hand, however, since the SECAM system carrier chrominance signals are FM (frequency modulated) signals and further superposed upon the luminance signals, it is impossible to use the comb filter to separate the carrier chrominance signals from the luminance signals in the SECAM system.

Therefore, there exists a problem in that it is impossible to use a comb filter used for recording PAL video signals in common in order to separate luminance signals and carrier chrominance signals from SECAM system color television video signals to be recorded, and therefore it is necessary to further incorporate another different LPF, thus increasing the manufacturing cost of the apparatus.

### SUMMARY OF THE INVENTION

With these problems in mind, therefore, it is the primary object of the present invention to provide a low-priced magnetic recording and reproducing apparatus for selectively recording and reproducing color television video signals of both PAL and SECAM systems.

The present invention provides a magnetic recording and reproducing apparatus for recording and reproducing PAL and SECAM system color video signals in both high and standard picture quality modes, respectively, which comprises:
(a) color video signal recording means including:
   (1) discriminating means responsive to incoming color video signals, for discriminating whether the incoming color video signals are PAL system signals or SECAM system signals and outputting a SECAM discriminating signal when SECAM system signals are received;
   (2) comb filter means responsive to color video signals, for separating luminance signals from the PAL color video signal;
   (3) first low-pass filter means for filtering wide-band luminance signals in the PAL high picture quality mode;
   (4) second low-pass filter means for filtering low-band luminance signals in the PAL standard picture quality mode;
   (5) first switching means responsive to the incoming color video signals and connected between said comb filter means and said first and second low-pass filter means; such that when said first switching means is activated in response to no SECAM discriminating signal, said comb filter means is connected to said two first and second filter means to supply PAL system luminance signals; and when said first switching means is activated in response to a SECAM discriminating signal, the incoming video signal is directly supplied to said second low-pass filter to separate SECAM system luminance signals;
   (6) first frequency modulating means for modulating high picture quality mode luminance signals;
   (7) second frequency modulating means connected to said second low-pass filter means, for modulating standard picture quality mode luminance signals;
   (8) second switching means connected between said first and second low-pass filter means and said first frequency modulating means; such that when said second switching means is activated in response to no SECAM discriminating signal, said first low pass filter means is connected to said first frequency modulating means; and when said second switching means is activated in response to a SECAM discriminating signal, said second low-pass filter means is connected to said first frequency modulating means;
   (9) third switching means connected to the outputs of said first and second frequency modulating means, for selecting one of high and standard picture quality luminance signals;
   (10) generating means responsive to incoming video signals, for generating carrier chrominance signals;
   (11) mixing means connected to said third switching means and said generating means, for mixing luminance signals generated from one of said first and second frequency modulating means with the carrier chrominance signals generated by said generating means; and
   (12) recording means connected to the output of said mixing means, for recording color video signals on a magnetic medium; and
(b) color video signal reproducing means for reproducing PAL and SECAM system color video signals in both high and standard picture quality modes, respectively.

The present invention also provides a method of recording PAL and SECAM color video signals selectively in one of a high picture quality and a standard picture quality mode, which comprises the steps of:
(a) discriminating whether incoming color video signals are PAL system signals or SECAM system signals;
(b) separating color signals from the incoming color video signals and converting the separated color signals to low-band frequencies to produce low-band color signals;
(c) if PAL system signals are discriminated, separating PAL luminance signals from said PAL color video signal by a comb filter;
(i) if the standard picture quality mode is selected passing said PAL luminance signals through a first low-pass filter means having a first cut-off frequency and frequency modulating the filter signal by a first frequency modulating means;
(ii) if the high picture quality mode is selected passing said PAL luminance signals through a second low-pass filter means having a second cut-off frequency higher than said first cut-off frequency and frequency modulating the filtered signal by a second frequency modulating means;
(d) if SECAM system signals are discriminated, separating SECAM luminance signals from said SECAM system signals by said first low-pass filter means;
(i) if the standard picture quality mode is selected frequency modulating said SECAM luminance signals by said first frequency modulating means;
(ii) if the high picture quality mode is selected frequency modulating said SECAM luminance signals by said second frequency modulating means; and
(e) mixing and recording the frequency modulated luminance signals and the low-band color signals.

The feature of the apparatus of the present invention is to use the second low-pass filter in common in both PAL and SECAM color video signal recording modes. That is, in PAL mode, luminance signals, are separated from AM carrier chrominance signals by a YC separating comb filter and then supplied to the first and second low-pass filters for preventing aliasing noise from being generated when the luminance signals are thereafter frequency modulated in PAL color video signal recording mode. On the other hand, in SECAM mode, luminance signals are separated from FM carrier chrominance signals by the same second low-pass filter before frequency-modulated in SECAM color video signal recording mode.

Since the second low-pass filter can be used to prevent aliasing noise in PAL video signal recording mode and further to separate a luminance signal from.the carrier chrominance signals in SECAM video signal recording mode, it is possible to reduce the number of low-pass filters, thus reducing the cost of the apparatus.

### BRIEF DESCRIPTION OF THE DRAWINGS

The features and advantages of the magnetic recording and reproducing apparatus according to the present invention will be more clearly appreciated from the following description taken in conjunction with the accompanying drawings in which like reference numerals designate the same or similar elements or sections throughout the figures thereof and in which:
Fig. 1(A) is a schematic block diagram showing a recording system of a prior-art magnetic recording and reproducing apparatus;
Fig. 1(B) is a schematic block diagram showing a reproducing system of the same prior-art apparatus;
Fig. 2(A) is a schematic block diagram showing a recording system of an embodiment of the magnetic recording and reproducing system according to the present invention;
Fig. 2(B) is a schematic block diagram showing an reproducing apparatus of the same embodiment of the present invention;
Fig. 3 is a schematic block diagram showing a embodiment of a SECAM discriminator incorporated in the apparatus of the present invention; and
Figs. 4(A) and (B) are waveform diagrams for assistance in explaining the operation of the SECAM discriminator shown in Fig. 3.

### DETAILED DESCRIPTION OF THE PREFERRED EMBODIMENTS

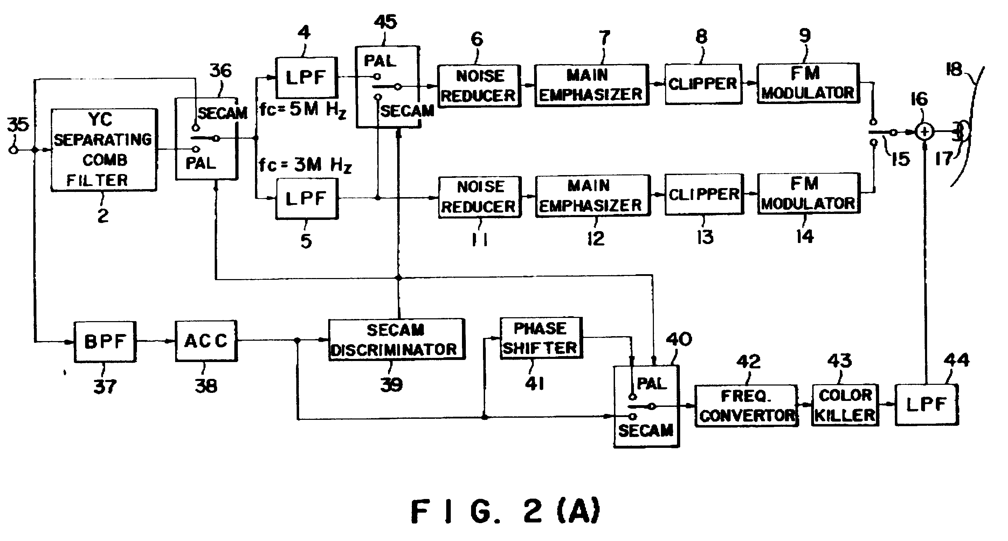

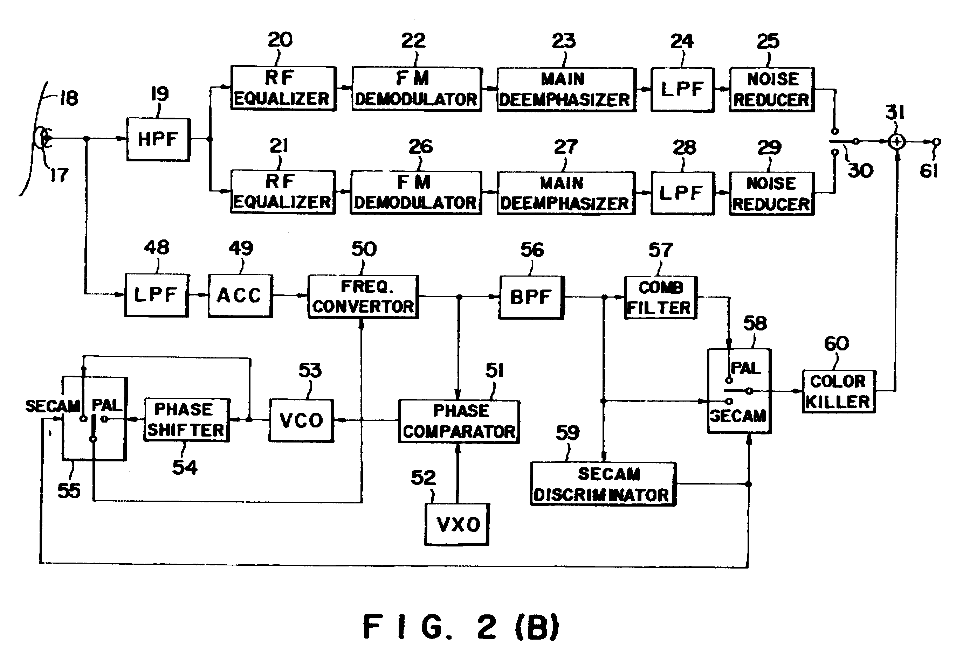

Figs. 2(A) and 2(B) show a recording system and a reproducing system, respectively of an embodiment of the present invention, in which the same reference numerals have been retained for similar sections having the same functions as in Figs. 1(A) and 1(B), without repeating any detailed description of them.

In the recording system shown in Fig. 2(A), incoming SECAM system color video signals are received at an input terminal 35 in addition to incoming PAL system color video signals. These received PAL and SECAM system color video signals are applied to a YC separating comb filter 2, a first switch circuit 36, and a band-pass filter (referred to as BPF, hereinafter) 37, respectively. Carrier chrominance signals are separated or filtered from the video signals by the BPF 37.

The carrier chrominance signals are passed through an ACC circuit 38 to control signal level of the whole carrier chrominance signals so that color burst level can be adjusted at an appropriate constant level, and then supplied to a SECAM discriminator 39, a switch circuit 40 and a phase shifter 41.

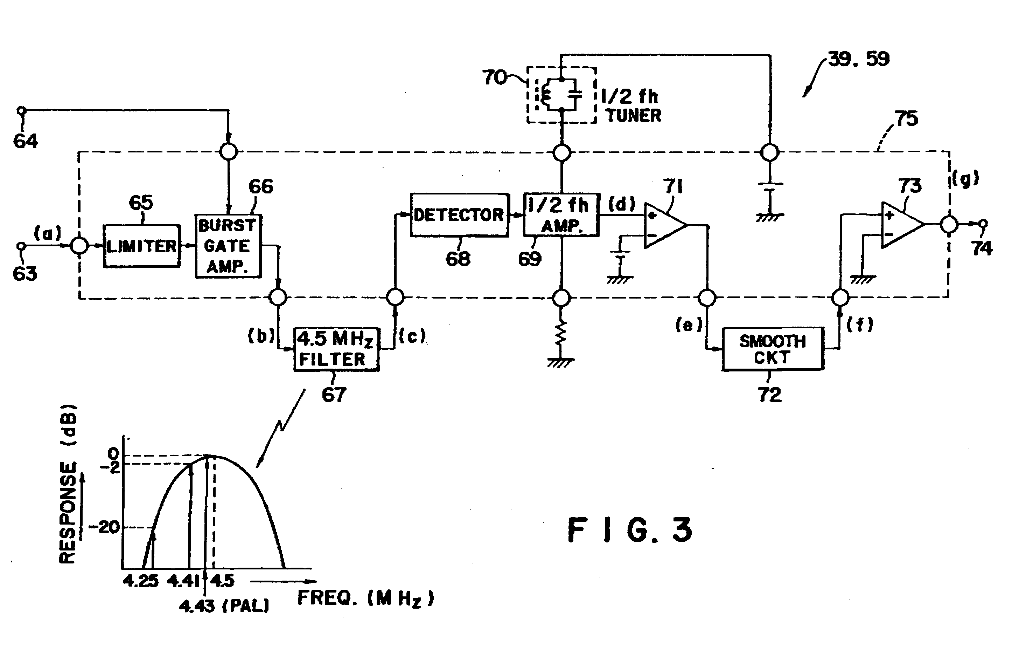

This SECAM discriminator 39 discriminates whether the received color video signals are of SECAM system or of PAL system, which can be configured as shown in Fig. 3. In Fig. 3, color burst signals a extracted from the carrier chrominance signal outputted from the ACC circuit 38 via well-known means are applied to an input terminal 63. On the other hand, a burst gate pulse formed by the horizontal synchronizing signal is applied to an input terminal 64.

The color burst signal a is passed through the limiter 65 to limit the amplitude thereof, and then supplied to a burst gate amplifier 66 so as to be superposed upon the burst gate pulse.

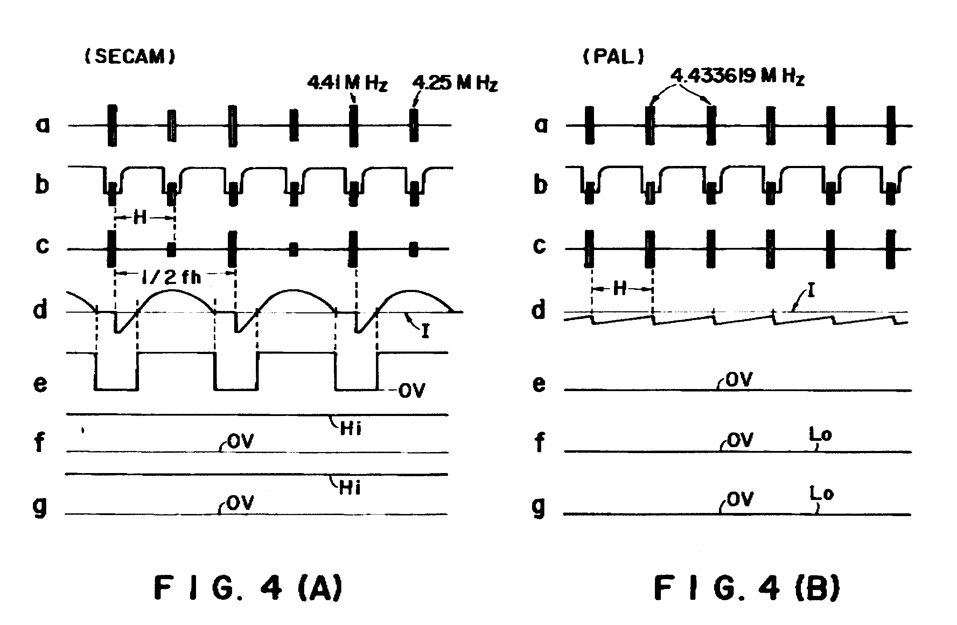

Where the inputted color video signals are of SECAM system, since the color burst signal a includes 4.41 MHz pulses and 4.25 MHz pulses generated alternately for each horizontal scanning period (H), an output signal b as shown in Fig. 4(A) is outputted from the burst gate amplifier 66. This signal b is passed through a 4.5 MHz filter 67 with band-pass filter characteristics such that the attenuation rate is zero at 4.5 MHz but increases with increasing and decreasing frequencies (as depicted in Fig. 3). Therefore, since the amplitude level of the signal b is more emphasized at 4.41 MHz near to 4.5 MHz than at 4.25 MHz remote from 4.5 MHz, a signal c as shown in Fig. 4(A) can be obtained through the 4.5 MHz filter 67 and then supplied to a detector 68 and a 1/2 fₕ amplifier 69 (where fₕ denotes the horizontal scanning frequency). Further, since a 1/2 fₕ tuner 70 is connected to the 1/2 fₕ amplifier 69, only the 1/2 fₕ components are amplified and the fₕ components are attenuated, so that a signal d as shown in Fig. 4(A) can be obtained and supplied to a comparator 71.

This comparator 71 compares this signal d with a reference level I and outputs a pulse signal e as shown in Fig. 4(A). This pulse signal e is smoothed by a smoothing circuit 72 to obtain a high-voltage level signal f as shown, compared with a reference level by a comparator 73 to generate a high-level SECAM discrimination signal g from an output terminal 74.

In contrast with this, where the inputted color video signals are of PAL system, the color burst signal a includes 4.433619 MHz pulses generated for each horizontal scanning period (H). The envelope of the burst signal a is at a constant level as shown in Fig. 4(B). Therefore, the burst gate amplifier 66 outputs a signal b as shown in Fig. 4(B); the 4.5 MHz filter 67 outputs a signal c with a constant envelope; and the 1/2 fₕ amplifier 69 outputs a signal d which will not exceed the reference level I. Therefore, the comparator 71 generates an output signal e indicative of zero voltage, so that the smoothing circuit 72 and the comparator 73 generate both low-level signals f and g as shown in Fig. 4(B). In the embodiment, a great portion of the SECAM discriminator 39 is configured as an integrated circuit which is enclosed by a broken line 75 in Fig. 3.

With reference to Fig. 2(A), the SECAM discrimination signal g outputted from the SECAM discriminator 39 is applied to a first switch circuit 36, a second switch circuit 45 and a third switch circuit 40, respectively as switching signals.
(A) PAL color video signal recording operation
   In response to no SECAM discrimination signal, the first switch circuit 36 is connected to the YC separating comb filter 2 to select comb filter luminance signals; the second switch circuit 45 is connected to the LPF 4 to select wide-band luminance signals; and the third switch circuit 40 is connected to a phase shifter 41 to select phase-shifted carrier chrominance signals.
   The phase shifter 41 effects phase shift processing such that one field period during which the chrominance subcarrier phase is sequentially shifted by 90 degrees in a predetermined direction every horizontal scanning period (H) and the other field period during which the chrominance subcarrier phase is not shifted are formed alternately. A frequency converter 42 converts the carrier chrominance signals to low-band frequencies. Therefore, in this case, phase-shifted and low-frequency converted subcarrier chrominance signals are supplied to a mixer 16 via a color killer 43 and an LPF 44 so as to be mixed with any one of the first and second FM luminance signals.
(B) SECAM color video signal recording operation
   In response to a SECAM discrimination signal, the first switch circuit 36 is directly connected to the input terminal 35 to receive SECAM color video signals; the second circuit 45 is connected to the LPF 5 to select narrow-band luminance signals; and the third switch circuit 40 is not connected to the phase shifter 41 to select carrier chrominance signals. That is, SECAM color video signals bypassing to YC separating the comb filter 2 are directly applied to an LPF 5 with a cut-off frequency of 3 MHz via the switch 36 to separate or filter luminance signals from video signals, and then supplied to a noise reducer 6 via the second switch circuit 45 and directly to a noise reducer 11.
   Therefore, the same band luminance signals are supplied to the two FM modulators 9 to 14, respectively, and converted into the third FM luminance signals and the fourth FM luminance signals, respectively. Since the band of the third FM luminance signals is wider than that of the fourth FM luminance signals and further higher frequency components can be reproduced when the third FM luminance signals are reproduced as compared when the fourth FM luminance signals are reproduced, the horizontal resolution power of the third FM luminance signals is higher than that of the fourth FM luminance signals.
   Further, in this SECAM color video signal recording operation, since the carrier chrominance signals (FM signal) are directly supplied to the frequency converter 42 without passing through the phase shifter 41, the low-band frequency-converted carrier chrominance signals are supplied to the mixer 16 as FM signals without phase shift.
   The reproducing operation will be described with reference to Fig. 2(B). The luminance signal reproducing processing in frequency division multiplex method is the same in both SECAM and PAL systems.
   On the other hand, the carrier chrominance signals in frequency division multiplex system are reproduced and reconverted to the original band carrier chrominance signals through an LPF 48 with a cut-off frequency 3 MHz, an ACC circuit 49, and a frequency converter 50. The reproduced and reconverted carrier chrominance signal is supplied to a phase comparator 51 at which the phase of an output signal from a voltage controlled quartz oscillator (VXO) 52 is compared with that of the color burst signal to generate a phase error signal.
   An error signal outputted from the phase comparator 51 is supplied to a voltage controlled oscillator (VCO) 53, a phase shifter 54, and a switch circuit 55, in sequence. On the other hand, an output signal of the VCO 53 is directly supplied to the switch circuit 55.
   The SECAM discriminator 59 is configured in the same way as in the SECAM discriminator 39 shown in Fig. 3, and outputs a SECAM discrimination signal when SECAM color video signals are reproduced.
(C) PAL color video signal reproducing operation
   Since the switch circuit 55 is selected to the phase shifter 54, the phase-shifted signals are supplied to the frequency converter 50 in the same way as in the prior-art apparatus, in order to cancel the phase shift of the reproduced carrier chrominance signals produced when recorded.
   The reproduced reconverted carrier chrominance signals outputted from the frequency converter 50 are supplied to a BPF 56 to eliminate unnecessary frequency components and then supplied to a crosstalk eliminating comb filter 57, a switch circuit 58, and a SECAM discriminator 59, respectively.
   Since the switch 58 is selected to the comb filter 57, reproduced carrier chrominance signals whose crosstalk from adjacent tracks is eliminated are selected via the switch 58, and supplied to a mixer 31 via a color killer 60, so that the reproduced carrier chrominance signals are mixed with the reproduced luminance signals and then outputted through an output terminal 61.
(D) SECAM color video signal reproducing operation
   Since the switch circuit 55 is selected to the VCO 53, signals whose phase is not shifted are supplied to the frequency converter 50. Further, since the switch circuit 58 is switched so as to bypass the comb filter 57, reproduced carrier chrominance signals not passed through the comb filter 57 are supplied to the mixer 31 via the color killer 60, so that the reproduced carrier chrominance signals are mixed with the reproduced luminance signals and then outputted through the output terminal 61.

Further, in Fig. 2(B), the reason why the luminance signals recorded in high picture quality mode are passed through the LPF 24 with a cut-off frequency 5 MHz without being passed through the LPF 28 with a cut-off frequency 3 MHz is that the LPFs are provided for eliminating carrier components in the reproduced luminance signals.

Further, without being limited to the above embodiment, the apparatus according to the present invention can be modified in various forms. For instance, it is also possible to adopt a single frequency modulator provided with external circuit constants so that different carrier frequencies can be selected according to the video signal modes.

As described above, in the magnetic recording and reproducing apparatus of the present invention, in SECAM color video signal recording operation, the SECAM color video signals are supplied to the LPF 5, without passing through the YC separating comb filter 2, via the first switch 36 in order to separate the luminance signals therefrom. Further, the luminance signals (Y) are supplied to the first frequency modulator 9 via the second switch 45 to obtain the third frequency modulated (FM) luminance signals for high picture quality mode or directly to the second frequency modulator 14 to obtain the fourth frequency modulated (FM) luminance signals for standard picture quality mode.

Therefore, the above second filter 5 is used in common as an aliasing noise prevention filter required when PAL color video signals are being recorded. That is, this LPF 5 is used in common as a luminance signal separating filter during SECAM color video signal recording operation but as an aliasing noise prevention filter during PAL color video signal recording operation, thus reducing the number of parts and therefore the cost of the magnetic recording and reproducing apparatus which can record and reproduce color video signals in both high and standard picture quality modes and in both PAL and SECAM systems.

## Claims

1. A magnetic recording and reproducing apparatus for recording and reproducing PAL and SECAM system color video signals in both high and standard picture quality modes, respectively, which comprises:
(a) color video signal recording means including:
(1) discriminating means (39) responsive to incoming color video signals, for discriminating whether the incoming color video signals are PAL system signals or SECAM system signals and outputting a SECAM discriminating signal when SECAM system signals are received;
(2) comb filter means (2) responsive to color video signals, for separating luminance signals from the PAL color video signal;
(3) first low-pass filter means (4) for filtering wide-band luminance signals in the PAL high picture quality mode;
(4) second low-pass filter means (5) for filtering low-band luminance signals in the PAL standard picture quality mode;
(5) first switching means (36) responsive to the incoming color video signals and connected between said comb filter means and said first and second low-pass filter means (4,5); such that when said first switching means is activated in response to no SECAM discriminating signal, said comb filter means is connected to said two first and second filter means to supply PAL system luminance signals; and when said first switching means is activated in response to a SECAM discriminating signal, the incoming video signal is directly supplied to said second low-pass filter (5) to separate SECAM system luminance signals;
(6) first frequency modulating means (9) for modulating high picture quality mode luminance signals;
(7) second frequency modulating means (14) connected to said second low-pass filter means (5), for modulating standard picture quality mode luminance signals;
(8) second switching means (45) connected between said first and second low-pass filter means (4, 5) and said first frequency modulating means (9); such that when said second switching means is activated in response to no SECAM discriminating signal, said first low pass filter means (4) is connected to said first frequency modulating means (9); and when said second switching means is activated in response to a SECAM discriminating signal, said second low-pass filter means (5) is connected to said first frequency modulating means (9);
(9) third switching means (15) connected to the outputs of said first and second frequency modulating means, for selecting one of high and standard picture quality luminance signals;
(10) generating means (41-44) responsive to incoming video signals, for generating carrier chrominance signals;
(11) mixing means (16) connected to said third switching means (15) and said generating means, for mixing luminance signals generated from one of said first and second frequency modulating means with the carrier chrominance signals generated by said generating means; and
(12) recording means (17) connected to the output of said mixing means, for recording color video signals on a magnetic medium; and
(b) color video signal reproducing means (17-61) for reproducing PAL and SECAM system color video signals in both high and standard picture quality modes, respectively.

2. The magnetic recording and reproducing apparatus of claim 1, wherein said discriminating means (39) comprises:
(a) superposing means (66) for superposing a color burst signal (a) upon a burst gate pulse to obtain a superposed signal (b);
(b) 4.5 MHz filter means (67) with a peak response value at 4.5 MHz, for filtering the superposed signal (b) to generate a filtered signal (c);
(c) detector means (68) for detecting the filtered signal (c);
(d) 1/2 fₕ amplifier means (69) tuned by a 1/2 fₕ tuner (70), for amplifying only 1/2 fₕ frequency components of the detected signal, where fₕ denotes a horizontal scanning frequency, to generate an amplified signal (d);
(e) comparing means (71) for comparing the amplified signal (d) with a reference level to generate a pulse signal (e); and
(f) smoothing means (72) for smoothing the pulse signal (e) to generate a SECAM discriminating signal (g) having a predetermined level.

3. A method of recording PAL and SECAM color video signals selectively in one of a high picture quality and a standard picture quality mode, which comprises the steps of:
(a) discriminating whether incoming color video signals are PAL system signals or SECAM system signals;
(b) separating color signals from the incoming color video signals and converting the separated color signals to low-band frequencies to produce low-band color signals;
(c) if PAL system signals are discriminated, separating PAL luminance signals from said PAL color video signals by a comb filter (2);
(i) if the standard picture quality mode is selected passing said PAL luminance signals through a first low-pass filter means (5) having a first cut-off frequency and frequency modulating the filter signal by a first frequency modulating means (14);
(ii) if the high picture quality mode is selected passing said PAL luminance signals through a second low-pass filter means (4) having a second cut-off frequency higher than said first cut-off frequency and frequency modulating the filtered signal by a second frequency modulating means (9);
(d) if SECAM system signals are discriminated, separating SECAM luminance signals from said SECAM system signal by said first low-pass filter means (5);
(i) if the standard picture quality mode is selected frequency modulating said SECAM luminance signals by said first frequency modulating means (14);
(ii) if the high picture quality mode is selected frequency modulating said SECAM luminance signals by said second frequency modulating means (9); and
(e) mixing and recording the frequency modulated luminance signals and the low-band color signals.

## Patentansprüche

1. Magnetisches Aufzeichnungs- und Wiedergabegerät zum Aufzeichnen und Wiedergeben von PAL- und SECAM-System-Farbvideosignalen sowohl in einer Betriebsart mit hoher Bildqualität als auch in einer Betriebsart mit Standardbildqualität oder normaler Bildqualität, welches Gerät umfaßt;
(a) Farbvideosignal-Aufzeichnungsmittel enthaltend:
(1) Eine auf zugeführte Farbvideosignale ansprechende Diskriminiereinrichtung (39) zum Feststellen, ob die zugeführten Farbvideosignale PAL-Systemsignale oder SECAM-Systemsignale sind, und zum Ausgeben eines SECAM-Diskriminiersignals, wenn SICAM-Systemsignale empfangen werden,
(2) Eine auf Farbvideosignale ansprechende Kammfiltereinrichtung (2) zum Trennen von Luminanzsignalen aus dem PAL-Farbvideosignal,
(3) Eine erste Tiefpaßfiltereinrichtung (4) zum Filtern von Breitband-Luminanzsignalen in der PAL-Betriebsart hoher Bildqualität,
(4) Eine zweite Tiefpaßfiltereinrichtung (5) zum Filtern von Niedrigband-Luminanzsignalen in der PAL-Betriebsart normaler Bildqualität,
(5) Eine auf die zugeführten Farbvideosignale ansprechende erste Schalteinrichtung (36), die zwischen die Kammfiltereinrichtung und die erste und zweite Tiefpaßfiltereinrichtung (4, 5) derart geschaltet ist, daß bei einer Aktivierung der ersten Schalteinrichtung aufgrund eines nicht vorhandenen SECAM-Diskriminiersignals die Kammfiltereinrichtung zum Zuführen von PAL-System-Luminanzsignalen sowohl mit der ersten als auch mit der zweiten Filtereinrichtung verbunden ist und daß bei Aktivierung der ersten Schalteinrichtung aufgrund eines vorhandenen SECAM-Diskriminiersignals das zugeführte Videosignal zum Abtrennen von SECAM-System-Luminanzsignalen direkt dem zweiten Tiefpaßfilter (5) zugeführt wird,
(6) Eine erste Frequenzmodulationseinrichtung (9) zum Modulieren von Luminanzsignalen in der Betriebsart hoher Bildqualität,
(7) Eine mit der zweiten Tiefpaßfiltereinrichtung (5) verbundene zweite Frequenzmodulationseinrichtung (14) zum Modulieren von Luminanzsignalen in der Betriebsart normaler Bildqualität,
(8) Eine zweite Schalteinrichtung (45), die zwischen die erste und zweite Tiefpaßfiltereinrichtung (4, 5) und die erste Frequenzmodulationseinrichtung (9) derart geschaltet ist, daß bei Aktivierung der zweiten Schalteinrichtung aufgrund eines nicht vorhandenen SECAM-Diskriminiersignals die erste Tiefpaßfiltereinrichtung (4) mit der ersten Frequenzmodulationseinrichtung (9) verbunden ist und bei Aktivierung der zweiten Schalteinrichtung aufgrund eines vorhandenen SECAM-Diskriminiersignals die zweite Tiefpaßfiltereinrichtung (5) mit der ersten Frequenzmodulationseinrichtung (9) verbunden ist,
(9) Eine an die Ausgänge der ersten und zweiten Frequenzmodulationseinrichtung angeschlossene dritte Schalteinrichtung (15) zum Treffen einer Auswahl zwischen Luminanzsignalen hoher Bildqualität und Luminanzsignalen normaler Bildqualität,
(10) Eine auf die zugeführten Videosignale ansprechende Erzeugungseinrichtung (41 bis 44) zum Erzeugen von Trägerchrominanzsignalen,
(11) Eine an die dritte Schalteinrichtung (15) und die Erzeugungseinrichtung angeschlossene Mischeinrichtung (16) zum Mischen von Luminanzsignalen, die von der ersten oder von der zweiten Frequenzmodulationseinrichtung erzeugt sind, mit den von der Erzeugungseinrichtung erzeugten Trägerchrominanzsignalen, und
(12) Eine an den Ausgang der Mischeinrichtung angeschlossene Aufzeichnungseinrichtung (17) zum Aufzeichnen von Farbvideosignalen auf einem Magnetträger, und
(b) Farbvideosignal-Wiedergabemittel (17 bis 61) zum Wiedergeben von PAL- und SECAM-System-Farbvideosignalen sowohl in der Betriebsart hoher Bildqualität als auch in der Betriebsart normaler Bildqualität.

2. Magnetisches Aufzeichnungs- und Wiedergabegerät nach Anspruch 1, bei dem die Diskriminiereinrichtung (39) enthält:
(a) Eine Überlagerungseinrichtung (66) zum Überlagern eines Farbsynchronsignals (a) auf einen Synchrontorimpuls zum Gewinnen eines überlagerten Signals (b),
(b) Eine 4,5-MHz-Filtereinrichtung (67) mit einem Spitzenansprechempfindlichkeitswert bei 4,5 MHz zum Filtern des überlagerten Signals (b) zwecks Erzeugung eines gefilterten Signals (c),
(c) Eine Detektoreinrichtung (68) zum Erfassen des gefilterten Signals (c),
(d) Eine von einem 1/2-fₕ-Tuner (70) abgestimmte 1/2-fₕ-Verstärkereinrichtung (69) zum Verstärken von lediglich 1/2-fₕ-Frequenzkomponenten des erfaßten Signals zwecks Erzeugung eines verstärkten Signals (d), wobei fₕ eine Horizontalabtastfrequenz bezeichnet,
(e) Eine Vergleichseinrichtung (71) zum Vergleichen des verstärkten Signals (d) mit einem Referenzpegel zum Erzeugen eines Impulssignals (e), und
(f) Eine Glättungseinrichtung (72) zum Glätten des Impulssignals (e) zum Erzeugen eines SECAM-Diskriminiersignals (g) mit einem vorbestimmten Pegel.

3. Verfahren zum Aufzeichnen von PAL- und SECAM-Farbvideosignalen wahlweise in einer Betriebsart mit hoher Bildqualität und einer Betriebsart mit Standardbildqualität oder normaler Bildqualität, welches Verfahren die Schritte enthält:
(a) Feststellen, ob zugeführte Farbvideosignale PAL-Systemsignale oder SECAM-Systemsignale sind,
(b) Abtrennen von Farbsignalen aus den zugeführten Farbvideosignalen und Umsetzen der abgetrennten Farbsignale in Niedrigbandfrequenzen zum Erzeugen von Niedrigbandfarbsignalen,
(c) Wenn PAL-Systemsignale festgestellt werden, Abtrennen von PAL-Luminanzsignalen aus den PAL-Farbvideosignalen mit einem Kammfilter (2),
(i) Wenn die Betriebsart normaler Bildqualität ausgewählt ist, Weiterleiten der PAL-Luminanzsignale durch eine erste Tiefpaßfiltereinrichtung (5) mit einer ersten Grenzfrequenz und Frequenzmodulieren des gefilterten Signals mit einer ersten Frequenzmodulationseinrichtung (14),
(ii) Wenn die Betriebsart hoher Bildqualität ausgewählt ist, Weiterleiten der PAL-Luminanzsignale durch eine zweite Tiefpaßfiltereinrichtung (4) mit einer zweiten Grenzfrequenz, die höher als die erste Grenzfrequenz ist, und Frequenzmodulieren des gefilterten Signals mit einer zweiten Frequenzmodulationseinrichtung (9),
(d) Wenn SECAM-Systemsignale festgestellt werden, Abtrennen von SECAM-Luminanzsignalen aus den SECAM-Systemsignalen von der ersten Tiefpaßfiltereinrichtung (5),
(i) Wenn die Betriebsart normaler Bildqualität ausgewählt ist, Frequenzmodulieren der SECAM-Luminanzsignale mit der ersten Frequenzmodulationseinrichtung (14),
(ii) Wenn die Betriebsart hoher Bildqualität ausgewählt ist, Frequenzmodulieren der SECAM-Luminanzsignale mit der zweiten Frequenzmodulationseinrichtung (9), und
(e) Mischen und Aufzeichnen der frequenzmodulierten Luminanzsignale und der Niedrigbandfarbsignale.

## Revendications

1. Un appareil magnétique d'enregistrement et de reproduction destiné à enregistrer et reproduire des signaux vidéo couleur selon les systèmes PAL et SECAM, dans les deux modes de haute qualité et de qualité normale d'image, respectivement, qui comprend:
(a) un moyen d'enregistrement de signaux vidéo couleur incluant:
(1) un moyen discriminateur (39) qui répond à des signaux vidéo couleur entrants pour discriminer si les signaux vidéo couleur entrants sont des signaux du système PAL ou des signaux du système SECAM et pour produire un signal discriminant SECAM lorsque des signaux du système SECAM sont reçus;
(2) un moyen de filtre-peigne (2) qui répond à des signaux vidéo couleur pour séparer des signaux de luminance à partir du signal vidéo couleur PAL;
(3) un premier moyen de filtre passe-bas (4) pour filtrer des signaux de luminance à large bande dans le mode de haute qualité d'image PAL;
(4) un deuxième moyen de filtre passe-bas (5) pour filtrer des signaux de luminance à bande basse dans le mode de qualité d'image normale PAL;
(5) un premier moyen commutateur (36) qui répond aux signaux vidéo couleur entrants et qui est relié entre ledit moyen de filtre-peigne et lesdits premier et deuxième moyens de filtres passe-bas (4, 5); d'une manière telle que ledit moyen de filtre-peigne est relié, lorsque ledit premier moyen commutateur est activé en réponse à une absence de signal discriminateur SECAM, auxdits deux moyens de filtre, le premier et le second, pour produire des signaux de luminance du système PAL; et que le signal vidéo entrant est directement amené, lorsque ledit premier moyen commutateur est activé en réponse à un signal discriminateur SECAM, audit deuxième filtre passe-bas (5) afin de séparer des signaux de luminance du système SECAM;
(6) un premier moyen modulateur de fréquence (9) pour moduler des signaux de luminance en mode de haute qualité d'image;
(7) un deuxième moyen modulateur de fréquence (14) relié audit deuxième moyen de filtre passe-bas (5) pour moduler des signaux de luminance en mode de qualité normale d'image;
(8) un deuxième moyen commutateur (45) relié entre lesdits premier et deuxième moyens de filtres passe-bas (4, 5) et ledit premier moyen modulateur de fréquence (9); d'une manière telle que ledit moyen de filtre passe-bas (4) est relié, lorsque ledit deuxième moyen commutateur est activé en réponse à une absence de signal discriminateur SECAM, audit moyen modulateur (9); et que ledit deuxième filtre passe-bas (5) est relié, lorsque ledit deuxième moyen commutateur est activé en réponse à un signal discriminateur SECAM, audit deuxième premier moyen modulateur de fréquence (9);
(9) un troisième moyen commutateur (15) relié aux sorties desdits premier et deuxième moyens modulateurs de fréquences, pour choisir l'un des signaux de luminance, de haute qualité ou de qualité normale d'image;
(10) un moyen générateur (41 à 44) qui répond à des signaux vidéo entrants pour engendrer des signaux de chrominance porteurs;
(11) un moyen mélangeur (16), relié audit troisième moyen commutateur (15) et audit moyen générateur, pour mélanger des signaux de luminance engendrés par l'un desdits premier et deuxième moyens modulateurs de fréquences avec les signaux de chrominance porteurs engendrés par ledit moyen générateur; et
(12) un moyen d'enregistrement (17) relié à la sortie dudit moyen mélangeur, pour enregistrer les signaux vidéo couleur sur un milieu magnétique; et
(b) un moyen reproducteur (17 à 61) de signaux vidéo couleur pour reproduire des signaux vidéo couleur des systèmes PAL et SECAM dans les deux modes de haute qualité et de qualité normale d'image, respectivement.

2. L'appareil d'enregistrement et de reproduction selon la revendication 1, dans lequel ledit moyen discriminateur (39) comprend:
(a) un moyen de superposition (66) pour superposer un signal de chrominance de couleur (a) sur une impulsion de porte de chrominance afin d'obtenir un signal superposé (b);
(b) un moyen de filtre (67) à 4,5 MHz dont la valeur de réponse de pointe est de 4,5 MHz, pour de filtrer le signal superposé (b) de manière à engendrer un signal filtré (c);
(c) un moyen détecteur (68) pour détecter le signal filtré (c);
(d) un moyen amplificateur (69) à 1/2 fₕ accordé par un dispositif d'accord (70) à 1/2 fₕ, pour n'amplifier que les composantes de fréquence 1/2 fₕ du signal détecté, où fₕ désigne une fréquence horizontale de balayage, afin d'engendrer un signal amplifié (d);
(e) un moyen comparateur (71) pour comparer à un niveau de référence le signal amplifié (d) afin d'engendrer un signal d'impulsion (e); et
(f) un moyen de lissage (72) pour lisser le signal d'impulsion (e) afin d'engendrer un signal discriminateur SECAM (g) à niveau prédéterminé.

3. Un procédé d'enregistrement de signaux vidéo couleur PAL et SECAM sélectivement dans l'un des modes de haute qualité d'image et de qualité normale d'image qui comprend les étapes consistant à:
(a) discriminer si des signaux vidéo couleur entrants sont des signaux du système PAL ou des signaux du système SECAM;
(b) séparer des signaux couleur à partir des signaux vidéo couleur entrants et convertir les signaux couleur séparés à des fréquences de bande de basses fréquences afin de produire des signaux couleur de bande de basses fréquences.
(c) séparer, si des signaux du système PAL sont discriminés, des signaux de luminance PAL à partir dudit signal vidéo couleur PAL par un filtre-peigne (2);
(i) Envoyer, si ledit mode de qualité normale d'image est choisi, lesdits signaux de luminance PAL à travers un premier moyen de filtre passe-bas (5) à première fréquence de coupure et moduler en fréquence le signal de filtre par un premier moyen modulateur de fréquence (14);
(ii) envoyer, si ledit mode de haute qualité d'image est choisi, lesdits signaux de luminance PAL à travers un deuxième moyen de filtre passe-bas (14) à deuxième fréquence de coupure plus élevée que ladite première fréquence de coupure et moduler en fréquence ledit signal filtré par un deuxième moyen modulateur de fréquence (9);
(d) séparer, si lesdits signaux du système SECAM sont discriminés, lesdits signaux de luminance SECAM à partir dudit signal du système SECAM par ledit premier moyen de filtre passe-bas (5);
(i) moduler en fréquence, si ledit mode de qualité normale d'image est choisi, lesdits signaux de luminance SECAM par ledit premier moyen modulateur de fréquence (14);
(ii) moduler en fréquence, si ledit mode de haute qualité d'image est choisi, lesdits signaux de luminance SECAM par ledit deuxième moyen modulateur de fréquence (9); et
(e) mélanger et enregistrer les signaux de luminance modulés en fréquence et les signaux de couleur de bande de basses fréquences.
